(19) Europäisches Patentamt
European Patent Office
Office européen des brevets

(11) EP 4 668 900 A1

(12) **EUROPEAN PATENT APPLICATION**
published in accordance with Art. 153(4) EPC

(43) Date of publication:
24.12.2025 Bulletin 2025/52

(51) International Patent Classification (IPC):
**H04W 52/14** (2009.01)

(21) Application number: 23922034.6

(52) Cooperative Patent Classification (CPC):
**H04W 52/14; H04W 52/18**

(22) Date of filing: 17.02.2023

(86) International application number:
**PCT/CN2023/076970**

(87) International publication number:
**WO 2024/168903 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.**
**Beijing 100085 (CN)**

(72) Inventor: **GAO, Xueyuan**
**Beijing 100085 (CN)**

(74) Representative: **Dehns Germany Partnerschaft
mbB**
**Theresienstraße 6-8**
**80333 München (DE)**

(54) **POWER CONTROL METHOD AND DEVICE AND STORAGE MEDIUM**

(57) The present disclosure relates to a power control method and device and a storage medium, relates to the technical field of communication, and is used to improve the transmission quality of uplink transmission and system transmission throughput. The method comprises: determining a maximum transmission power of each antenna panel in a plurality of antenna panels used for simultaneous transmission via multi-panel (STxMP) transmission by a terminal; and performing power control on each antenna panel on the basis of the maximum transmission power of each antenna panel.

Determine the maximum transmission power of each panel in multiple panels used by the terminal for performing STxMP transmission — S11

Perform the power control on each panel based on the maximum transmission power of each panel — S12

FIG. 2

EP 4 668 900 A1

## Description

TECHNICAL FIELD

The present disclosure relates to the field of communication technology, and in particular to a power control method, apparatus and storage medium.

BACKGROUND

In the uplink Multiple-Input Multiple-Output (MIMO) enhancement of release 18 (R18), consideration is given to achieving uplink simultaneous transmission to multiple transmission and reception points (TRPs) through multiple antenna panels, so as to further improve the uplink system transmission throughput and transmission reliability.

However, in the related art, corresponding power control is performed only on antenna panels under the time-division multiplexing (TDM) scheme of single TRP and multiple TRPs. It is not yet clear how to perform a power control on each antenna panel during uplink simultaneous transmission via multi-panel (STxMP) transmission.

SUMMARY

In order to overcome the problems existing in the related art, the present disclosure provides a power control method, apparatus and storage medium.

According to a first aspect of the embodiments of the present disclosure, a method for power control is provided, where the method is performed by a terminal and includes:

determining a maximum transmission power of each antenna panel in multiple antenna panels used by the terminal for performing uplink simultaneous transmission via multi-panel STxMP transmission; and

performing a power control on each antenna panel based on the maximum transmission power of each antenna panel.

According to a second aspect of the embodiments of the present disclosure, a method for power control is provided, where the method is performed by a network device and includes:

configuring, for a terminal, a maximum transmission power of the terminal and/or a maximum transmission power of each antenna panel for performing uplink simultaneous transmission via multi-panel STxMP transmission; and

determining a power control, performed by the terminal, of each antenna panel based on the maximum transmission power of each antenna panel.

According to a third aspect of the embodiments of the present disclosure, a power control apparatus is provided, where the apparatus includes: a determination module, adapted to determine a maximum transmission power of each antenna panel in multiple antenna panels used by the terminal for performing uplink simultaneous transmission via multi-panel STxMP transmission; and

a control module, adapted to perform a power control on each antenna panel based on the maximum transmission power of each antenna panel.

According to a fourth aspect of the embodiments of the present disclosure, a power control apparatus is provided, where the apparatus includes:

a processing module, adapted to configure, for a terminal, a maximum transmission power of the terminal and/or a maximum transmission power of each antenna panel for performing uplink simultaneous transmission via multi-panel STxMP transmission; and determine a power control, performed by the terminal, of each antenna panel based on the maximum transmission power of each antenna panel.

According to a fifth aspect of the embodiments of the present disclosure, a communication apparatus is provided and includes: a processor; and

a memory, adapted to store processor-executable instructions;

where the processor is configured to: execute the method according to the first aspect and any one of implementations thereof.

According to a sixth aspect of the embodiments of the present disclosure, a communication apparatus is provided and includes: a processor; and

a memory, adapted to store processor-executable instructions;

where the processor is configured to: execute the method according to the second aspect and any one of implementations thereof.

According to a seventh aspect of the embodiments of the present disclosure, a storage medium is provided, where the storage medium stores instructions and, when the instructions in the storage medium are executed by a processor of a terminal, the terminal is enabled to perform the method according to the first aspect and any one of implementations thereof.

According to an eighth aspect of the embodiments of the present disclosure, a storage medium is provided, where the storage medium stores instructions and, when the instructions in the storage medium are executed by a processor of a network device, the network device is enabled to perform the method according to the second aspect and any one of implementations thereof.

According to a ninth aspect of the embodiments of the present disclosure, a communication system is provided, including a terminal and a network device, where the terminal is configured to perform the method according to the first aspect and any one of implementations thereof; and the network device is configured to perform the method according to the second aspect and any one of implementations thereof.

The technical solution according to some embodiments of the present disclosure may include the following beneficial effects. The maximum transmission power of each antenna panel in multiple antenna panels used by the terminal for performing uplink simultaneous transmission via multi-panel transmission is determined, and the power control is further performed on each antenna panel based on the maximum transmission power of each antenna panel, thereby enabling the power control of each antenna panel, and further improving the transmission quality of the uplink transmission and the system transmission throughput.

It is to be understood that the foregoing general description and the following detailed description are exemplary and explanatory only and are not restrictive of the present disclosure.

BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.

Fig. 1 is a schematic diagram of a wireless communication system according to an exemplary embodiment.

Fig. 2 is a flow chart showing a power control method according to an exemplary embodiment.

Fig. 3 is a flow chart showing a power control method according to an exemplary embodiment.

Fig. 4 is a flow chart showing a power control method according to an exemplary embodiment.

Fig. 5 is a flow chart showing a power control method according to an exemplary embodiment.

Fig. 6 is a flow chart showing a power control method according to an exemplary embodiment.

Fig. 7 is a flow chart showing a power control method according to an exemplary embodiment.

Fig. 8 is a flow chart showing a power control method according to an exemplary embodiment.

Fig. 9 is a flow chart showing a power control method according to an exemplary embodiment.

Fig. 10 is a flow chart showing a power control method according to an exemplary embodiment.

Fig. 11 is a flow chart showing a power control method according to an exemplary embodiment.

Fig. 12 is a flow chart showing a power control method according to an exemplary embodiment.

Fig. 13 is a flow chart showing a power control method according to an exemplary embodiment.

Fig. 14 is a block diagram showing a power control apparatus according to an exemplary embodiment.

Fig. 15 is a block diagram showing a power control apparatus according to an exemplary embodiment.

Fig. 16 is a block diagram showing a power control apparatus according to an exemplary embodiment.

Fig. 17 is a block diagram showing a power control apparatus according to an exemplary embodiment.

DETAILED DESCRIPTION

Here, exemplary embodiments will be described in detail, examples of which are shown in the accompanying drawings. When the following description refers to the drawings, unless otherwise indicated, the same numbers in different drawings represent the same or similar elements. The implementations described in the following exemplary embodiments do not represent all implementations consistent with the present disclosure.

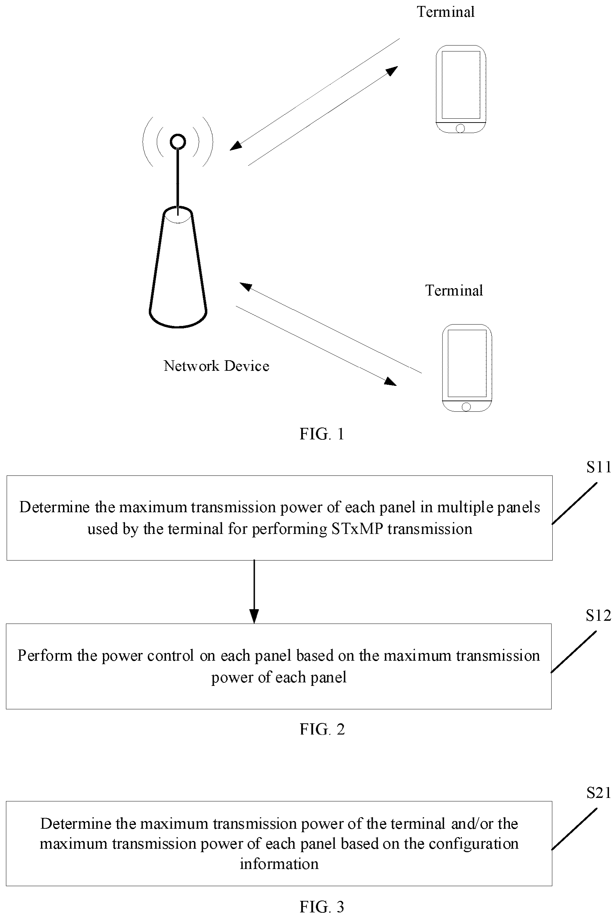

The power control method involved in the present disclosure can be applied to the wireless communication system shown in Fig. 1. The network system may include network devices and terminals. It can be understood that the wireless communication system shown in Fig. 1 is only for schematic illustration, and the wireless communication system may also include other network devices, for example, core network devices, wireless relay devices, and wireless backhaul devices, which are not shown in Fig. 1. The embodiments of the present disclosure do not limit the number of network devices and terminals included in the wireless communication system.

It can be further understood that the wireless communication system according to some embodiments of the present disclosure is a network that provides wireless communication functions. The wireless communication system can adopt different communication technologies, such as Code Division Multiple Access (CDMA), Wideband Code Division Multiple Access (WCDMA), Time Division Multiple Access (TDMA), Frequency Division Multiple Access (FDMA), Orthogonal Frequency-Division Multiple Access (OFDMA), Single Carrier FDMA (SC-FDMA), Carrier Sense Multiple Access with Collision Avoidance. According to the capacity, rate, delay and other factors of different networks, the network can be divided into 2G (English: Generation) network, 3G network, 4G network or future evolution network, such as the fifth generation wireless communication system (5G) network, and the 5G network can also be called a new Radio (NR). For the convenience of description, the present disclosure sometimes refers to the wireless communication network as a network.

Furthermore, the network device involved in the present disclosure may also be referred to as a wireless access network device. The wireless access network device may be: a base station, an evolved Node B (eNB), a home base station, an access point (AP) in a wireless fidelity (WIFI) system, a wireless relay node, a wireless backhaul node, a transmission point (TP) or a transmission and receiving point (TRP), and the like. It may also be a gNB in an NR system, or it may also be a component or part of a device constituting a base station. In a vehicle-to-everything (V2X) communication system, the network device may also be a vehicle-mounted device. It should be understood that the embodiments of the present disclosure do not limit the specific technology and specific device form adopted by the network device.

Furthermore, the terminal involved in the present disclosure may also be referred to as a terminal device, a user equipment (UE), a mobile station (MS), a mobile terminal (MT), and the like. The terminal is a device that provides voice and/or data connectivity to users. For example, the terminal may be a handheld device, a vehicle-mounted device, and the like, with wireless connection function. At present, some examples of terminals are: a mobile phone, a pocket personal computer (PPC), a handheld computer, a personal digital assistant (PDA), a laptop computer, a tablet computer, a wearable device, or a vehicle-mounted device, and the like. In addition, in a vehicle-to-everything (V2X) communication system, the terminal device may also be a vehicle-mounted device. It should be understood that the embodiments of the present disclosure do not limit the specific technology and specific device form adopted by the terminal.

In the embodiments of the present disclosure, the network device and the terminal may use any feasible wireless communication technology to achieve mutual data transmission. The transmission channel corresponding to the network device sending data or control information to the terminal is called a downlink channel (downlink, DL), and the transmission channel corresponding to the terminal sending data or control information to the network device is called an uplink channel (uplink, UL). It can be understood that the network device involved in the embodiments of the present disclosure may be a base station. The network device may also be any other possible network device, and the terminal may be any possible terminal, which is not limited by the present disclosure.

With the development of communication technology, in order to ensure coverage, the uplink physical uplink shared channel (PUSCH) transmission directs to multiple transmission reception points (TRPs) of network device. In release (R) 17, collaborative transmission under the time-division multiplexing (TDM) transmission mode was introduced. Different repetitions of the same information on PUSCH are sent to different TRPs of the base station in a time-division manner through different transmission opportunities (TO) in time domain. This method has relatively low requirements on terminal capabilities and does not require the ability to support simultaneous transmission of beams, but the transmission delay is relatively large.

For the uplink, the PUSCH channels facing different TRPs may actually pass through channels with very different spatial characteristics. Therefore, it is believed that the quasi-co-location QCL-D of PUSCH channels in different sending directions is different.

In R18, a main goal is to achieve simultaneous collaborative transmission in multiple TRP directions through multiple antenna panels to increase transmission reliability and throughput, and reduce transmission delay under multiple TRPs, but the terminal is required to have the ability to send multiple beams simultaneously. The PUSCH transmission can be based on multi-panel or multi-TRP transmission scheduled by a single physical downlink control channel (PDCCH), i.e., a single-downlink control information (S-DCI), as shown in Fig. 2. The PUSCH transmission can also be based on multi-panel or multi-TRP transmission scheduled by different PDCCHs, i.e., multi-DCI (M-DCI), as shown in Fig. 3.

Terminals are generally configured with multiple panels, and the capabilities of different panels may also be different. For example, different panels have different numbers of SRS ports, and different panels support different maximum data transmission layers. For example, one panel supports a maximum of 2 layers of transmission, and another panel supports a maximum of 4 layers of transmission. The network device may determine whether the terminal is currently suitable for uplink simultaneous transmission via multi-panel. If the terminal is currently suitable for uplink simultaneous transmission via multi-panel and is scheduled at the same time, the network device may directly or indirectly indicate the relevant transmission parameters, including terminal-specific beam indication information, the number of data layers used for transmission, the allocation of DMRS ports used, precoding indication information, and the like.

For uplink simultaneous transmission via multi-panel, the coordinated transmission scheduling of a TB (Transport Block) of PUSCH based on a single DCI includes a variety of different transmission schemes. Each transmission scheme is briefly described below.

As to Space Division Multiplexing (SDM) scheme, different parts of a TB of PUSCH are sent on the same time-frequency resources to two different TRPs through their corresponding DMRS ports or port combinations allocated on different panels, where different panels or different TRPs/transmission opportunities TOs are associated with different TCIstates, i.e. beams.

As to Single Frequency Network (SFN) spatial division multiplexing scheme, a TB of PUSCH is sent on the same time-frequency resources to two different TRPs through the same DMRS port or port combination allocated on different panels, where different panels or different TRPs/TOs are associated with different TCIstates, i.e. beams.

In the R18 uplink multiple-input multiple-output (MIMO) enhancement, it is considered to realize uplink simultaneous transmission to multiple TRPs through multiple panels to further improve the uplink system transmission throughput and transmission reliability. However, in the related art, corresponding power control is performed only on the antenna panels under the time-division multiplexing (TDM) scheme of single TRP and multiple TRPs.

In one implementation, the transmission power used by the terminal when performing PUSCH transmission is determined based on the following manner:

$$P_{PUSCH,b,f,c}\left(i,j,q_d,l\right) = \min\left\{\begin{array}{l} P_{CAMX,f,c}\left(i\right) \\ P_{O\_PUSCH,b,f,c}\left(j\right) + 10\log_{10}\left(2^{\mu} \cdot M_{RB,b,f,c}^{PUSCH}\left(i\right)\right) + \alpha_{b,f,c}\left(j\right) \cdot PL_{b,f,c}\left(q_d\right) + \Delta_{TF,b,f,c}\left(i\right) + f_{b,f,c}\left(i,l\right) \end{array}\right\}$$

where $b$ represents the activated uplink bandwidth part, $f$ represents the carrier frequency, c represents the serving cell, i represents the i-th transmission of PUSCH in the terminal, $j$ represents the parameter set number used by the terminal, $q_d$ represents the pilot resource sequence number used in the path loss configured by the radio resource control RRC, $l$ represents the parameter state number, $P_{CAMX,f,c}(i)$ represents the maximum transmission power that the terminal can configure, $P_{O\_PUSCH,b,f,c}(j)$ represents the target power of the terminal for PUSCH transmission, $\mu$ represents the subcarrier spacing configuration number, $M_{RB,b,f,c}^{PUSCH}\left(i\right)$ is the PUSCH resource allocation bandwidth, represents the number of allocated physical resource blocks, $\alpha_{b,f,c}(j)$ represents the path loss compensation factor, $PL_{b,f,c}(q_d)$ represents the path loss compensation parameter, $\Delta_{TF,b,f,c}(i)$ represents the power offset value, and $f_{b,f,c}(i,l)$ represents the closed-loop power adjustment parameter.

However, it is not clear how to control the power of each antenna panel during uplink simultaneous transmission via multi-panel (STxMP) transmission.

Based on this, the embodiment of the present disclosure provides the power control method to determine the maximum transmission power of each panel in multiple panels used by the terminal for performing uplink simultaneous transmission via multi-panel, and further perform the power control on each panel based on the maximum transmission power of each panel, thereby achieving the power control of each panel and improving the transmission quality of the uplink transmission and the system transmission throughput.

Fig. 2 is the flow chart showing a power control method according to an exemplary embodiment. Referring to Fig. 2, the power control method is performed by the terminal and includes the following steps.

In step S11, the maximum transmission power of each panel in multiple panels used by the terminal for performing the STxMP transmission is determined.

In some embodiments, the network device may configure the maximum transmission power of the terminal and/or the maximum transmission power of each panel, and the terminal determines the maximum transmission power of each panel based on the maximum transmission power of the terminal and/or the maximum transmission power of each panel configured by the network device. For example, the maximum transmission power of each panel may be half of the maximum transmission power of the terminal or the maximum transmission power of each panel may be the maximum transmission power of each panel configured by the network device.

In step S12, the power control is performed on each panel based on the maximum transmission power of each panel.

In some embodiments, a closed-loop power control and/or an open-loop power control is performed on each panel based on the maximum transmission power of each panel; or, a power back-off is performed on the actual transmission power of each panel based on the maximum transmission power of each panel.

In some embodiments of the present disclosure, the maximum transmission power of each panel in the multiple panels used by the terminal for performing the STxMP transmission is determined, and the power control is further performed on each panel based on the maximum transmission power of each panel, so that the power control of each panel can be achieved, thereby improving the transmission quality of uplink transmission and the system transmission throughput.

In a power control method according to some embodiments of the present disclosure, the network device can configure the maximum transmission power of the terminal and/or the maximum transmission power of each antenna panel. Referring to Fig. 3, the method includes the following steps.

In step S21, the maximum transmission power of the terminal and/or the maximum transmission power of each panel is determined based on the configuration information.

The configuration information may be sent by the network device to the terminal, or may be predefined by the protocol.

It should be noted that step S21 can be implemented alone or in conjunction with any embodiment of the present disclosure, and will not be elaborated.

In some embodiments, the terminal reports capability information, and the capability information is used to indicate the maximum transmission power of the terminal and/or the maximum transmission power of each panel. The network device configures the maximum transmission power of the terminal and/or the maximum transmission power of each panel based on the capability information reported by the terminal.

In some embodiments of the present disclosure, the network device can configure the maximum transmission power of the terminal and/or the maximum transmission power of each panel for the terminal, so that the terminal can determine the maximum transmission power of each panel based on the maximum transmission power of the terminal and/or the maximum transmission power of each panel configured by the network device, and perform the power control for each panel, thereby improving the transmission quality of uplink transmission and the system transmission throughput.

In a power control method according to some embodiments of the present disclosure, the terminal performs the STxMP transmission based on S-DCI scheduling or M-DCI scheduling, the maximum transmission power of the terminal configured by the configuration information is the first transmission power, and the maximum transmission power of each panel is determined based on the first transmission power.

In some embodiments of a power control method according to some embodiments of the present disclosure, the maximum transmission power of each panel is $\dfrac{1}{k}$ of the first transmission power, where k represents the number of the multiple panels, and k is a positive integer greater than 1.

For example, if the number of the multiple panels is 2, the maximum transmission power of each panel is half of the first transmission power.

In some embodiments of a power control method according to some embodiments of the present disclosure, the maximum transmission power of each panel is the first transmission power.

In some embodiments, the terminal does not impose a fixed limit on the maximum transmission power of each panel, and the maximum transmission power of each panel does not exceed the first transmission power.

In some embodiments of the present disclosure, when the network device configures the maximum transmission power of the terminal, the maximum transmission power of each panel can be determined based on the maximum transmission power of the terminal.

The following describes how to determine the maximum transmission power of each panel based on the maximum transmission power of the terminal and how to perform the power control on each panel.

In a power control method according to some embodiments of the present disclosure, a terminal performs the STxMP transmission based on M-DCI scheduling, different PUSCH transmissions associated with different panels or different TRPs are completely or partially overlapped in time domain, and the maximum transmission power of each panel is determined as $\frac{1}{k}$ of the first transmission power

In some embodiments, under M-DCI, different PDCCHs schedule different PDSCHs respectively, and different PDSCHs are associated with different panels or different TRPs respectively. When the terminal performs the STxMP transmission, different PDSCHs may be completely or partially overlapped in time domain. If different PDSCHs are not completely or partially overlapped in time domain, the transmission mode of the terminal is no longer the STxMP. Therefore, in some embodiments of the present disclosure, different PUSCH transmissions associated with different panels or different TRPs support complete overlap or partial overlap in time domain.

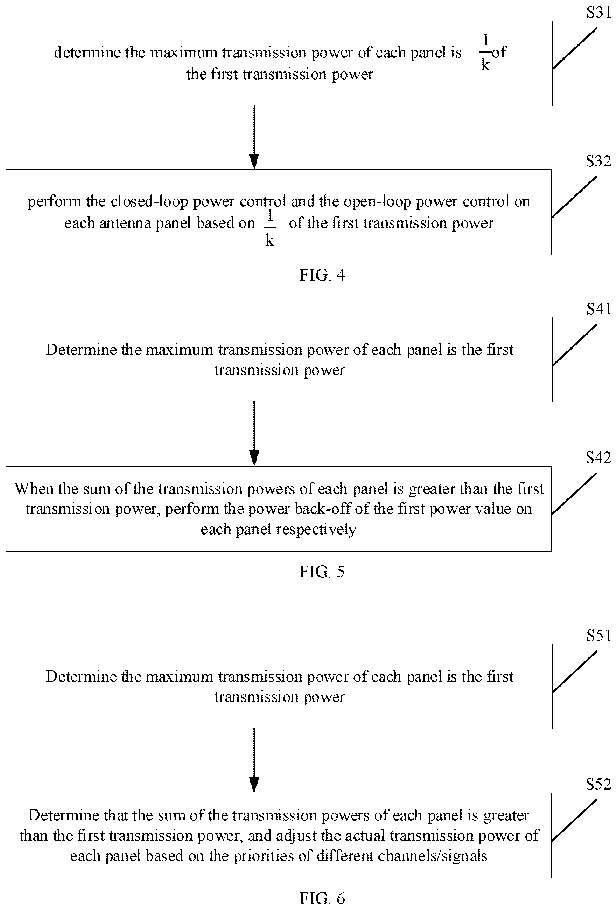

In a power control method according to some embodiments of the present disclosure, the maximum transmission power of each panel is determined as $\frac{1}{k}$ of the first transmission power, and the closed-loop power control and/or the open-loop power control is performed on each antenna panel based on $\frac{1}{k}$ of the first transmission power, as shown in Fig. 4, including the following steps.

In step S31, the maximum transmission power of each panel is determined as $\frac{1}{k}$ of the first transmission power.

In step S32, the closed-loop power control and/or the open-loop power control is performed on each antenna panel based on $\frac{1}{k}$ of the first transmission power.

In some embodiments, closed-loop power control parameters and open-loop power control parameters of each antenna panel may be independently configured.

It should be noted that steps S31-S32 can be implemented independently or in conjunction with any embodiment of the present disclosure, and will not be elaborated.

In some embodiment of the present disclosure, the maximum transmission power of each panel is determined as $\frac{1}{k}$ of the first transmission power. Since the value of k is the same as the number of panels, the sum of the maximum transmission powers of all panels will not exceed the first transmission power. Therefore, the terminal can perform the closed-loop power control and/or the open-loop power control on each panel independently based on $\frac{1}{k}$ of the first transmission power.

In a power control method according to some embodiments of the present disclosure, the terminal performs the STxMP transmission based on M-DCI scheduling, different PUSCH transmissions associated with different panels or different TRPs do not support partial overlap in time domain, and the maximum transmission power of each panel is the first transmission power.

In some embodiments, different PUSCH transmissions associated with different panels or different TRPs do not support partial overlap in time domain, which means that different PUSCH transmissions associated with different panels or different TRPs support complete overlap in time domain.

In some embodiments of the present disclosure, based on M-DCI scheduling, different PUSCH transmissions associated with different panels or different TRPs are completely overlapped in time domain. Accordingly, there is no fixed limit on the maximum transmission power of each panel, and the maximum transmission power of each panel does not exceed the first transmission power.

In some embodiments of a power control method according to some embodiments of the present disclosure, the maximum transmission power of each panel is determined as the first transmission power, and when the sum of the transmission powers of all panels is greater than the first transmission power, a power back-off of a first power value is performed on each panel. Referring to Fig. 5, the method includes the following steps.

In step S41, the maximum transmission power of each panel is determined as the first transmission power.

In step S42, when the sum of the transmission powers of each panel is greater than the first transmission power, the power back-off of the first power value is performed on each panel respectively.

The first power value is determined based on the sum of the transmission powers of each antenna panel.

In some embodiments, after the power back-off of the first power value is performed on each panel, the sum of the maximum transmission power of each panel is less than or equal to the first transmission power.

Taking two panels as an example, the transmission power of each panel is 23dBm, then the sum of the transmission powers of the two panels is 26dBm. If the second transmission power is 23dBm, the second power value can be 3dBm. After back-off of 3dBm is performed on each panel, the transmission power of each panel is 20dBm, and the sum of the transmission powers of the two panels is 23dBm.

In some embodiments, the first power value(s) corresponding to back-off on each panel may be the same or different.

It should be noted that steps S41-S42 can be implemented independently or in conjunction with any embodiment of the present disclosure, and will not be elaborated.

In some embodiments of the present disclosure, the maximum transmission power of each panel is determined as the first transmission power. When the sum of the transmission powers of each panel is greater than the first transmission power, the power back-off of the first power value is performed on each panel, so that the sum of the powers of each panel after the back-off is less than or equal to the first transmission power, thereby achieving better power control.

In some embodiments of a power control method according to some embodiments of the present disclosure, the maximum transmission power of each panel is determined as the first transmission power, and when the sum of the transmission powers of each panel is greater than the first transmission power, the actual transmission power of each panel is adjusted based on the priorities of different channels/signals. Referring to Fig. 6, the method includes the following steps.

In step S51, the maximum transmission power of each panel is determined as the first transmission power.

In step S52, it is determined that the sum of the transmission powers of each panel is greater than the first transmission power, and the actual transmission power of each panel is adjusted based on the priorities of different channels/signals.

The priorities of different channels/signals are determined based on DCI indication or based on default rules.

In some embodiments, in order to avoid high peak-to-average power ratio, simultaneous transmission of uplink control channels or data channels is not supported. Therefore, when multiple uplink channel resources overlap, specific information multiplexing or discarding transmission rule is to be defined, so that the terminal only transmits one uplink channel at the same time. That is, the priorities of different channels/signals are defined so that channels/signals with higher priorities are transmitted first.

In one implementation, when PUCCH and PUCCH/PUSCH resources in a time slot overlap, if there is a DCI scheduling corresponding to one of the PUCCH or PUSCH, when the overlapped channels include a PUCCH carrying HARQ-ACK, HARQ-ACK may be transmitted on PUSCH or PUCCH carrying other UCI.

Alternatively, when the overlapped channels include PUSCH, UCI may be multiplexed and transmitted on PUSCH.

Alternatively, when all PUCCHs and PUSCHs have no corresponding DCI, and when the overlapped channels include PUCCH carrying SPS HARQ-ACK, in order to ensure that PDSCH demodulation and PUCCH preparation are completed before transmitting HARQ-ACK, it is stipulated that the earliest transmission channel in the overlapped channels is only to meet the processing delay.

Alternatively, when the overlapped channels include PUCCH carrying SPS HARQ-ACK. That is, when PUCCH resources carrying CSI and SR overlap, or PUSCH without DCI scheduling overlaps with PUCCH resources carrying CSI and/or SR transmission, determination of timeline does not need to be performed.

In some embodiments, in order to avoid resource overlap between PUCCH and PUCCH/PUSCH that do not meet the timeline requirements, transmission multiplexing and discarding rules under multi-slot PUSCH/PUCCH can also be defined to determine the priorities of different channels/signals.

In some embodiments, the power back-off may not be performed on the channels/signals with high priority, but the power back-off may be performed on the channels/signals with low priority, so that the sum of the transmission powers of each panel after back-off is less than or equal to the first transmission power.

In some embodiments, a smaller power back-off may be performed on the channels/signals with high priority, and a larger power back-off may be performed on the channels/signals with low priority, to ensure that the sum of the transmission powers of each panel after back-off is less than or equal to the first transmission power.

It should be noted that steps S51-S52 can be implemented independently or in conjunction with any embodiment of the present disclosure, and will not be elaborated.

In some embodiments of the present disclosure, the maximum transmission power of each panel is determined as the first transmission power. When the sum of the transmission powers of each panel is greater than the first transmission power, the actual transmission power of each panel is adjusted by determining the priorities of different channels/signals to ensure better transmission of channels/signals with high priority.

In a power control method according to some embodiments of the present disclosure, the configuration information sent by the network device configures the maximum transmission power of the terminal as the second transmission power, and configures the maximum transmission power of each panel as the third transmission power, where the second transmission power is greater than or equal to the third transmission power.

The second transmission power may be the same as or different from the first transmission power.

In a power control method according to some embodiments of the present disclosure, the maximum transmission power of each panel is the third transmission power.

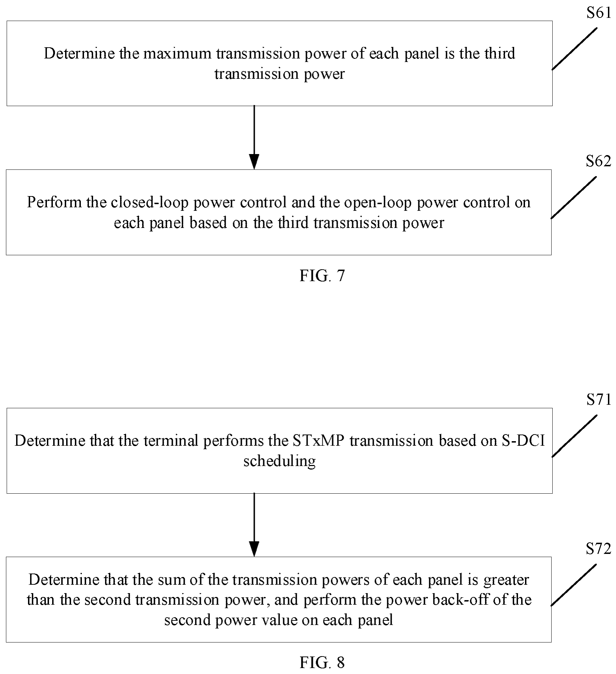

In a power control method according to some embodiments of the present disclosure, the maximum transmission power of each panel is determined as the third transmission power, and the closed-loop power control and/or the open-loop power control is performed on each panel based on the third transmission power. Referring to Fig. 7, the method includes the following steps.

In step S61, the maximum transmission power of each panel is determined as the third transmission power.

In step S62, the closed-loop power control and/or the open-loop power control is performed on each panel based on the third transmission power.

In some embodiments, closed-loop power control parameters and open-loop power control parameters of each antenna panel may be independently configured.

It should be noted that steps S61-S62 can be implemented independently or in conjunction with any embodiment of the present disclosure, and will not be elaborated.

In a power control method according to some embodiments of the present disclosure, after the power control is performed on each panel based on the third transmission power, the sum of the transmission powers of each panel may be greater than the second transmission power. Accordingly, power back-off is to be performed on the panel to ensure that the sum of the transmission powers of each panel is less than or equal to the second transmission power.

In some embodiments of a power control method according to some embodiments of the present disclosure, it is determined that the terminal performs the STxMP transmission based on S-DCI scheduling, and the terminal performs the power back-off on each panel respectively. Referring to Fig. 8, the method includes the following steps.

In step S71, it is determined that the terminal performs the STxMP transmission based on S-DCI scheduling.

In step S72, it is determined that the sum of the transmission powers of each panel is greater than the second transmission power, and the power back-off of the second power value is performed on each panel.

The second power value is determined based on the sum of the transmission powers of each antenna panel.

Taking two panels as an example, the transmission power of each panel is 23dBm, then the sum of the transmission powers of the two panels is 26dBm. If the second transmission power is 23dBm, the second power value can be 3dBm. After back-off of 3dBm is performed on each panel, the transmission power of each panel is 20dBm, and the sum of the transmission powers of the two panels is 23dBm.

In some embodiments, the second power values corresponding to back-off on each panel may be the same or different.

In the embodiments of the present disclosure, the maximum transmission power of each panel is determined as the third transmission power. When the sum of the transmission powers of each panel is greater than the second transmission power, the power back-off of the second power value is performed on each panel, so that the sum of the powers of each panel after back-off is less than or equal to the second transmission power, thereby achieving better power control.

It should be noted that steps S71-S72 can be implemented independently or in conjunction with any embodiment of the present disclosure, and will not be elaborated.

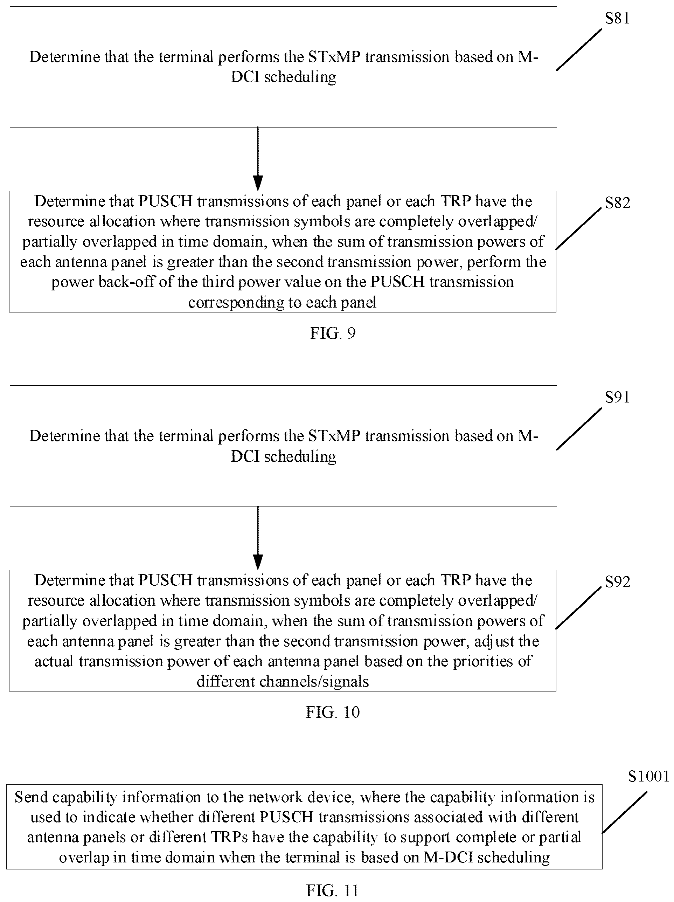

In some embodiments of a power control method according to some embodiments of the present disclosure, it is determined that the terminal performs the STxMP transmission based on M-DCI scheduling, and the terminal performs the power back-off of the third power value on the PUSCH transmission corresponding to each panel. Referring to Fig. 9, the method includes the following steps.

In step S81, it is determined that the terminal performs the STxMP transmission based on M-DCI scheduling.

In step S82, it is determined that PUSCH transmissions of each panel or each TRP have the resource allocation where transmission symbols are completely overlapped/partially overlapped in time domain, when the sum of transmission powers of each antenna panel is greater than the second transmission power, the power back-off of the third power value is performed on the PUSCH transmission corresponding to each panel.

The third power value is determined based on the sum of the transmission powers of each antenna panel.

In some embodiments, the third power values for PUSCH transmission back-off corresponding to each panel can be the same or different.

For example, the terminal performs simultaneous transmission on two panels based on M-DCI scheduling, where panel1 or TRP1 transmits PUSCH1, and panel2 or TRP2 transmits PUSCH2. The actual transmission power of PUSCH1 is P1, and the actual transmission power of PUSCH is P2. PUSCH1 is transmitted on 4 transmission symbols corresponding to 1, 2, 3, and 4, and PUSCH2 is transmitted on 4 transmission symbols corresponding to 2, 3, 4, and 5. Accordingly, PUSCH1 and PUSCH2 have overlapping transmission symbols 2, 3, and 4 in time domain. If the sum of P1 and P2 is greater than the second transmission power, the power back-off of the third power value is performed on the transmission symbol corresponding to the entire PUSCH of each panel. That is, the actual transmission power of PUSCH1 is backed off to P1-X1, and the actual transmission power of PUSCH2 is backed off to P2-X2, so that the actual transmission power of PUSCH1 and PUSCH2 after back-off is determined as less than or equal to the second transmission power. The specific values of X1 and X2 are determined by the terminal based on the sum of the actual transmission powers of PUSCH1 and PUSCH2, and the values of X1 and X2 may be the same or different. It should be noted that steps S81-S82 may be implemented alone or in conjunction with any embodiment of the present disclosure, and will not be elaborated.

In some embodiments of the present disclosure, the maximum transmission power of each panel is determined as the third transmission power. When the PUSCH transmissions of each panel or each TRP have the resource allocation where transmission symbols are completely overlapped/partially overlapped in time domain, and the sum of transmission powers of each panel is greater than the second transmission power, the power back-off of the third power value is performed on the PUSCH transmission corresponding to each panel, so that the sum of the transmission powers of each panel after back-off is less than or equal to the second transmission power, thereby achieving better power control.

In some embodiments of a power control method according to some embodiments of the present disclosure, it is determined that the terminal performs the STxMP transmission based on M-DCI scheduling, and the terminal adjusts the actual transmission power of each panel based on the priorities of different channels/signals. Referring to Fig. 10, the method includes the following steps.

In step S91, it is determined that the terminal performs the STxMP transmission based on M-DCI scheduling.

In step S92, it is determined that PUSCH transmissions of each panel or each TRP have the resource allocation where transmission symbols are completely overlapped/partially overlapped in time domain, when the sum of transmission powers of each antenna panel is greater than the second transmission power, the actual transmission power of each antenna panel is adjusted based on the priorities of different channels/signals.

The priorities of different channels/signals are determined based on DCI indication or based on default rules.

In some embodiments, in order to avoid high peak-to-average power ratio, simultaneous transmission of uplink control channels or data channels is not supported. Therefore, when multiple uplink channel resources overlap, specific information multiplexing or discarding transmission rule is to be defined so that the terminal only transmits one uplink channel at the same time. That is, the priorities of different channels/signals are defined so that channels/signals with higher priorities are transmitted first.

In one implementation, when PUCCH and PUCCH/PUSCH resources in a time slot overlap, if there is a DCI scheduling corresponding to one of the PUCCH or PUSCH, when the overlapped channels include PUCCH carrying HARQ-ACK, HARQ-ACK may be transmitted on PUSCH or PUCCH carrying other UCI.

Alternatively, when the overlapped channels include PUSCH, UCI may be multiplexed and transmitted on PUSCH.

Alternatively, when all PUCCHs and PUSCHs have no corresponding DCI, and when the overlapped channels include PUCCH carrying SPS HARQ-ACK, in order to ensure that PDSCH demodulation and PUCCH preparation are completed before transmitting HARQ-ACK, it is stipulated that the earliest transmission channel in the overlapped channels is only to meet the processing delay.

Alternatively, when the overlapped channels include PUCCH carrying SPS HARQ-ACK. That is, when PUCCH resources carrying CSI and SR overlap, or PUSCH without DCI scheduling overlaps with PUCCH resources carrying CSI and/or SR transmission, determination of timeline does not need to be performed.

In some embodiments, in order to avoid resource overlap between PUCCH and PUCCH/PUSCH that do not meet the timeline requirements, transmission multiplexing and discarding rules under multi-slot PUSCH/PUCCH can also be defined to determine the priorities of different channels/signals.

In some embodiments, the power back-off may not be performed on the channels/signals with high priority, but the power back-off may be performed on the channels/signals with low priority, so that the sum of the transmission powers of each panel after back-off is less than or equal to the second transmission power.

In some embodiments, a smaller power back-off may be performed on the channels/signals with high priority, and a larger power back-off may be performed on channels/signals with low priority to ensure that the sum of the transmission powers of each panel after back-off is less than or equal to the second transmission power.

It should be noted that steps S91-S92 can be implemented independently or in conjunction with any embodiment of the present disclosure, and will not be elaborated.

In some embodiments of the present disclosure, the maximum transmission power of each panel is determined as the third transmission power. When the sum of the transmission powers of each panel is greater than the second transmission power, the actual transmission power of each panel is adjusted by determining the priorities of different channels/signals to ensure better transmission of channels/signals with high priority.

In the above embodiments, when the network device configures the maximum transmission power of the terminal and/or the maximum transmission power of each panel, when the sum of the transmission powers of each panel is greater than the maximum transmission power of the terminal, the actual transmission power of each panel is adjusted by the terminal based on the priorities of different channels/signals.

The following describes how the terminal adjusts the actual transmission power of each panel based on the priorities of different channels/signals.

In some embodiments of a power control method according to some embodiments of the present disclosure, the power back-off is not performed on the actual transmission power of the panel corresponding to the channel/signal with the priority meeting the first priority condition, and the power back-off of the fourth power value is performed on the panel corresponding to the channel/signal with the priority meeting the second priority condition. In some embodiments, the fourth power values corresponding to back-off on each panel may be the same or different.

In some embodiments, the priority of the channel/signal with the priority meeting the first priority condition is greater than the priority of the channel/signal with the priority meeting the second priority condition.

In some embodiments of the present disclosure, when the sum of the transmission powers of each panel is greater than the maximum transmission power of the terminal, the power back-off of the actual transmission power is not performed on the panel corresponding to the channel/signal with the priority meeting the first priority condition, and the power back-off of the fourth power value is performed on the panel corresponding to the channel/signal with the priority meeting the second priority condition, so as to ensure the transmission of channels/signals with high priority.

In some embodiments of a power control method according to some embodiments of the present disclosure, the power back-off of the fifth power value is performed on the panel corresponding to the channel/signal with the priority meeting the third priority condition, and the power back-off of the sixth power value is performed on the panel corresponding to the channel/signal with the priority meeting the fourth priority condition, and the power difference between the sixth power value and the fourth power value is the target power difference.

In one implementation, the fifth power value is greater than the sixth power value.

In some embodiments, the fifth power value or the sixth power values corresponding to back-off on each panel may be the same or different.

In some embodiments, the target power differences of different channels/signals are the same or different. The target power differences of different channels/signals are determined based on the predefinition or the network device configuration.

For example, the target power differences of different channels/signals are determined as the same based on the predefinition manner. Alternatively, the target power differences of different channels/signals are defined independently based on the predefinition manner. Alternatively, the target power differences of different channels/signals are determined based on the network device configuration.

In some embodiments of a power control method according to some embodiments of the present disclosure, the power back-off of the same power value is performed on the panels corresponding to channels/signals with the same priority.

In the embodiments of the present disclosure, the power control is performed on different panels based on the priorities of channels/signals, so as to ensure the transmission of certain channels/signals.

In a power control method according to some embodiments of the present disclosure, the terminal determines whether different PUSCH transmissions associated with different panels or different TRPs have the capability to support complete or partial overlap in time domain, and reports the capability to the network device so that the network device determines the transmission mode of the PUSCH. Referring to Fig. 11, the method includes the following steps.

In step S1001, capability information is sent to the network device, where the capability information is used to indicate whether different PUSCH transmissions associated with different antenna panels or different TRPs have the capability to support complete or partial overlap in time domain when the terminal is based on M-DCI scheduling.

It should be noted that step S1001 can be implemented alone or in conjunction with any embodiment of the present disclosure, and will not be elaborated.

Based on the same concept, the present disclosure also provides a power control method applied to the network device.

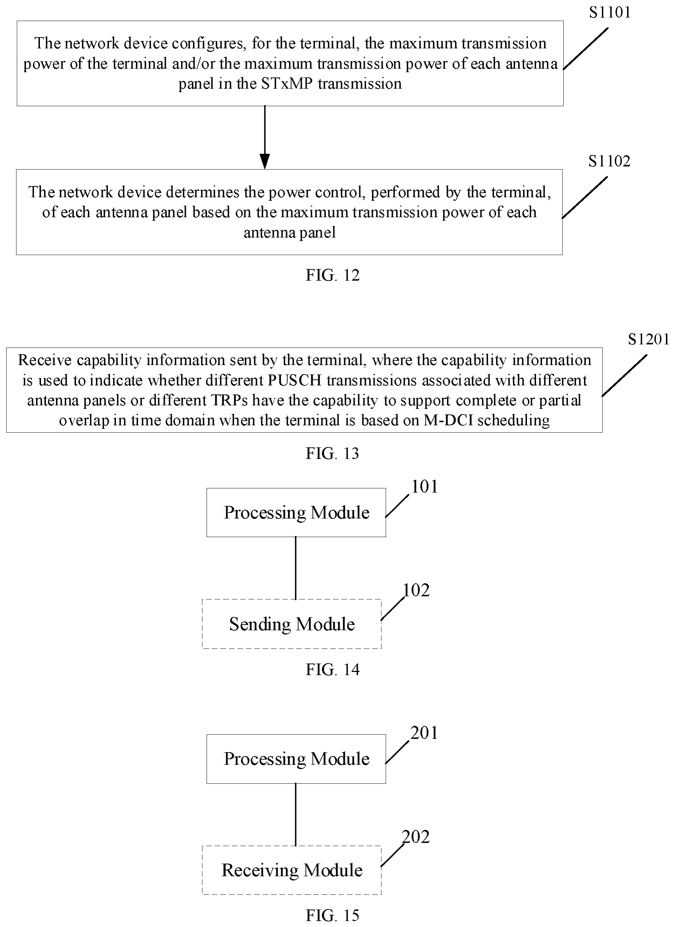

Fig. 12 is the flow chart showing a power control method according to an exemplary embodiment. Referring to Fig. 12, the power control method is performed by the network device and includes the following steps.

In step S1101, the network device configures, for the terminal, the maximum transmission power of the terminal and/or the maximum transmission power of each antenna panel in the STxMP transmission.

In some embodiments, the terminal reports capability information, and the capability information is used to indicate the maximum transmission power of the terminal and/or the maximum transmission power of each panel. The network device configures the maximum transmission power of the terminal and/or the maximum transmission power of each panel based on the capability information reported by the terminal.

In step S1102, the network device determines the power control, performed by the terminal, of each antenna panel based on the maximum transmission power of each antenna panel.

It should be understood that the terminal and the network device are to reach an agreement on the power control of each panel. That is, the network device knows the maximum transmission power of each antenna panel and the power control performed by the terminal on each antenna panel.

In some embodiments of the present disclosure, the network device can configure the maximum transmission power of the terminal and/or the maximum transmission power of each panel for the terminal, so that the terminal can determine the maximum transmission power of each panel based on the maximum transmission power of the terminal and/or the maximum transmission power of each panel configured by the network device, and perform the power control for each panel, thereby improving the transmission quality of uplink transmission and the system transmission throughput.

In a power control method according to some embodiments of the present disclosure, the network device determines that the maximum transmission power of the terminal is configured for the terminal, and the maximum transmission power of the terminal is the first transmission power, and the maximum transmission power of each panel is $\frac{1}{k}$ of the first transmission power, where k represents the number of multiple panels, and k is a positive integer greater than 1.

For example, if the number of the multiple panels is 2, the maximum transmission power of each panel is half of the first transmission power.

In some embodiments of a power control method according to some embodiments of the present disclosure, it is determined that the maximum transmission power of the terminal is configured for the terminal, the maximum transmission power of the terminal is the first transmission power, and the maximum transmission power of each panel is the first transmission power.

In some embodiments, there is no fixed limit on the maximum transmission power of each panel, and the maximum transmission power of each panel does not exceed the first transmission power.

In the embodiment of the present disclosure, when the network device configures the maximum transmission power of the terminal, the maximum transmission power of each panel can be determined based on the maximum transmission power of the terminal.

The following describes how to determine the maximum transmission power of each panel based on how to instruct the terminal.

In a power control method according to some embodiments of the present disclosure, the network device determines that the terminal performs the STxMP transmission based on M-DCI scheduling, and different PUSCH transmissions associated with different panels or different TRPs are completely or partially overlapped in time domain, then the maximum transmission power of each panel is $\frac{1}{k}$ of the first transmission power

In some embodiments, under M-DCI, different PDCCHs schedule different PDSCHs respectively, and different PDSCHs are associated with different panels or different TRPs respectively. When the terminal performs the STxMP transmission, different PDSCHs may be completely or partially overlapped in time domain. If different PDSCHs are not completely or partially overlapped in time domain, the transmission mode of the terminal is no longer the STxMP. Therefore, in some embodiments of the present disclosure, different PUSCH transmissions associated with different panels or different TRPs support complete overlap or partial overlap in time domain.

In a power control method according to some embodiments of the present disclosure, the maximum transmission power of each panel is $\frac{1}{k}$ of the first transmission power, and the closed-loop power control and/or the open-loop power control of each panel is determined based on $\frac{1}{k}$ of the first transmission power.

In some embodiments, the closed-loop power control parameters and the open-loop power control parameters of each antenna panel may be independently configured.

In some embodiments of the present disclosure, the maximum transmission power of each panel is $\frac{1}{k}$ of the first transmission power. Since the value of k is the same as the number of panels, the sum of the maximum transmission powers of all panels will not exceed the first transmission power, so that the terminal can perform the closed-loop power control and/or the open-loop power control on each panel independently based on $\frac{1}{k}$ of the first transmission power.

In a power control method according to some embodiments of the present disclosure, the network device determines that the terminal performs the STxMP transmission based on M-DCI scheduling, different PUSCH transmissions associated with different panels or different TRPs do not support partial overlap in time domain, and the maximum transmission power of each panel is the first transmission power.

In some embodiments, different PUSCH transmissions associated with different panels or different TRPs do not support partial overlap in time domain, which means that different PUSCH transmissions associated with different panels or different TRPs support complete overlap in time domain.

In some embodiments of the present disclosure, based on M-DCI scheduling, different PUSCH transmissions associated with different panels or different TRPs are completely overlapped in time domain. Accordingly, there is no fixed limit on the maximum transmission power of each panel, and the maximum transmission power of each panel does not exceed the first transmission power.

In a power control method according to some embodiments of the present disclosure, the maximum transmission power of each panel is the first transmission power, the sum of the transmission powers of each antenna panel is greater than the first transmission power, the power back-off of the first power value is performed on each antenna panel, and the first power value is determined based on the sum of the transmission powers of each panel.

Taking two panels as an example, the transmission power of each panel is 23dBm, then the sum of the transmission powers of the two panels is 26dBm. If the second transmission power is 23dBm, the second power value can be 3dBm. After back-off of 3dBm is performed on each panel, the transmission power of each panel is 20dBm, and the sum of the transmission powers of the two panels is 23dBm.

In some embodiments, the first power values corresponding to back-off on each panel may be the same or different.

In some embodiments of the present disclosure, the maximum transmission power of each panel is the first transmission power. When the terminal determines that the sum of the transmission powers of each panel is greater than the first transmission power, the terminal performs the power back-off of the first power value on each panel, so that the sum of the powers of each panel after back-off is less than or equal to the first transmission power, thereby enabling the terminal to achieve better power control.

In a power control method according to some embodiments of the present disclosure, the sum of the transmission powers of each panel is greater than the first transmission power, and the actual transmission power of each panel is adjusted based on the priorities of different channels/signals.

The priorities of different channels/signals are determined based on DCI indication or based on default rules.

In some embodiments, in order to avoid high peak-to-average power ratio, simultaneous transmission of uplink control channels or data channels is not supported. Therefore, when multiple uplink channel resources overlap, specific information multiplexing or discarding transmission rule is to be defined so that the terminal only transmits one uplink channel at the same time. That is, the priorities of different channels/signals are defined so that channels/signals with higher priorities are transmitted first.

In one implementation, when PUCCH and PUCCH/PUSCH resources in a time slot overlap, if there is a DCI scheduling corresponding to one of the PUCCH or PUSCH, when the overlapped channels include PUCCH carrying HARQ-ACK, HARQ-ACK may be transmitted on PUSCH or PUCCH carrying other UCI.

Alternatively, when the overlapped channels include PUSCH, UCI may be multiplexed and transmitted on PUSCH.

Alternatively, when all PUCCHs and PUSCHs have no corresponding DCI, and when the overlapped channels include PUCCH carrying SPS HARQ-ACK, in order to ensure that PDSCH demodulation and PUCCH preparation are completed before transmitting HARQ-ACK, it is stipulated that the earliest transmission channel in the overlapped channels is only to meet the processing delay.

Alternatively, when the overlapped channels include PUCCH carrying SPS HARQ-ACK. That is, when PUCCH resources carrying CSI and SR overlap, or PUSCH without DCI scheduling overlaps with PUCCH resources carrying CSI and/or SR transmission, determination of timeline does not need to be performed.

In some embodiments, in order to avoid resource overlap between PUCCH and PUCCH/PUSCH that do not meet the timeline requirements, transmission multiplexing and discarding rules under multi-slot PUSCH/PUCCH can also be defined to determine the priorities of different channels/signals.

In some embodiments, the terminal may not perform the power back-off on the channels/signals with high priority, but perform the power back-off on channels/signals with low priority, so that the sum of the transmission powers of each panel after back-off is less than or equal to the first transmission power.

In some embodiments, the terminal may perform a smaller power back-off on channels/signals with high priority and a larger power back-off on channels/signals with low priority to ensure that the sum of the transmission powers of each panel after back-off is less than or equal to the first transmission power.

In a power control method according to some embodiments of the present disclosure, the network device determines that the maximum transmission power of the terminal configured for the terminal is the second transmission power, and determines that the maximum transmission power of each antenna panel configured for the terminal is the third transmission power.

The second transmission power may be the same as or different from the first transmission power.

In a power control method according to some embodiments of the present disclosure, the network device determines that the maximum transmission power of each panel is the third transmission power, and the closed-loop power control and/or the open-loop power control of each panel is determined based on the third transmission power.

In a power control method according to some embodiments of the present disclosure, it is determined that the terminal performs the STxMP transmission based on S-DCI scheduling, the sum of the transmission powers of each panel is greater than the second transmission power, the power back-off of the second power value is performed on each panel, and the second power value is determined based on the sum of the transmission powers of each panel.

Taking two panels as an example, the transmission power of each panel is 23dBm, then the sum of the transmission powers of the two panels is 26dBm. If the second transmission power is 23dBm, the second power value can be 3dBm. After back-off of 3dBm is performed on each panel, the transmission power of each panel is 20dBm, and the sum of the transmission powers of the two panels is 23dBm.

In some embodiments, the second power values corresponding to back-off on each panel may be the same or different.

In a power control method according to some embodiments of the present disclosure, it is determined that the terminal performs the STxMP transmission based on M-DCI scheduling, the PUSCH transmissions of each panel or each TRP have the resource allocation where transmission symbols are completely overlapped/partially overlapped in time domain, the sum of the transmission powers of each panel is greater than the second transmission power, and the power back-off of the third power value is performed on the PUSCH transmission corresponding to each panel, and the third power value is determined based on the sum of the transmission powers of each antenna panel.

In some embodiments, the third power values corresponding to back-off on PUSCH transmission corresponding to each panel can be the same or different.

For example, the terminal performs simultaneous transmission on two panels based on M-DCI scheduling, where panel1 or TRP1 transmits PUSCH1, and panel2 or TRP2 transmits PUSCH2. The actual transmission power of PUSCH1 is P1, and the actual transmission power of PUSCH is P2. PUSCH1 is transmitted on 4 transmission symbols corresponding to 1, 2, 3, and 4, and PUSCH2 is transmitted on 4 transmission symbols corresponding to 2, 3, 4, and 5. Accordingly, PUSCH1 and PUSCH2 have overlapping transmission symbols 2, 3, and 4 in time domain. If the sum of P1 and P2 is greater than the second transmission power, the power back-off of the third power value is to be performed on the transmission symbol corresponding to the entire PUSCH of each panel. That is, the actual transmission power of PUSCH1 is backed off to P1-X1, and the actual transmission power of PUSCH2 is backed off to P2-X2, so that the actual transmission power of PUSCH1 and PUSCH2 after back-off is determined as less than or equal to the second transmission power. The specific values of X1 and X2 are determined by the terminal based on the sum of the actual transmission powers of PUSCH1 and PUSCH2, and the values of X1 and X2 can be the same or different. In a power control method according to some embodiments of the present disclosure, it is determined that the terminal performs the STxMP transmission based on M-DCI scheduling, and the PUSCH transmissions of each panel or different TRPs have the resource allocation where transmission symbols are completely overlapped/partially overlapped in time domain, the sum of the transmission powers of each panel is greater than the second transmission power, and the actual transmission power of each panel is adjusted based on the priorities of different channels/signals.

The priorities of different channels/signals are determined based on DCI indication or based on default rules.

In some embodiments, in order to avoid high peak-to-average power ratio, simultaneous transmission of uplink control channels or data channels is not supported. Therefore, when multiple uplink channel resources overlap, specific information multiplexing or discarding transmission rule is to be defined so that the terminal only transmits one uplink channel at the same time. That is, the priorities of different channels/signals are defined so that channels/signals with higher priorities are transmitted first.

In one implementation, when PUCCH and PUCCH/PUSCH resources in a time slot overlap, if there is a DCI scheduling corresponding to one of the PUCCH or PUSCH, when the overlapped channels include PUCCH carrying HARQ-ACK, HARQ-ACK may be transmitted on PUSCH or PUCCH carrying other UCI.

Alternatively, when the overlapped channels include PUSCH, UCI may be multiplexed and transmitted on PUSCH.

Alternatively, when all PUCCHs and PUSCHs have no corresponding DCI, and when the overlapped channels include PUCCH carrying SPS HARQ-ACK, in order to ensure that PDSCH demodulation and PUCCH preparation are completed before transmitting HARQ-ACK, it is stipulated that the earliest transmission channel in the overlapped channels is only to meet the processing delay.

Alternatively, when the overlapped channels include PUCCH carrying SPS HARQ-ACK. That is, when PUCCH resources carrying CSI and SR overlap, or PUSCH without DCI scheduling overlaps with PUCCH resources carrying CSI and/or SR transmission, determination of timeline does not need to be performed.

In some embodiments, in order to avoid resource overlap between PUCCH and PUCCH/PUSCH that do not meet the timeline requirements, transmission multiplexing and discarding rules under multi-slot PUSCH/PUCCH can also be defined to determine the priorities of different channels/signals.

In some embodiments, the terminal may not perform the power back-off on the channels/signals with high priority, but perform the power back-off on channels/signals with low priority, so that the sum of the transmission powers of each panel after back-off is less than or equal to the second transmission power.

In some embodiments, the terminal may perform a smaller power back-off on channels/signals with high priority and a larger power back-off on channels/signals with low priority to ensure that the sum of the transmission powers of each panel after back-off is less than or equal to the second transmission power.

The following describes how the actual transmission power of each panel is adjusted based on the priorities of different channels/signals.

In a power control method according to some embodiments of the present disclosure, it is determined that the terminal does not perform the power back-off on the actual transmission power of the panel corresponding to the channel/signal with the priority meeting the first priority condition, and it is determined that the power back-off performed by the terminal on the panel corresponding to the channel/signal with the priority meeting the second priority condition is the fourth power value.

In a power control method according to some embodiments of the present disclosure, the power back-off performed by the terminal on the panel corresponding to the channel/signal with the priority meeting the third priority condition is determined as the fifth power value, and the power back-off performed by the terminal on the panel corresponding to the channel/signal with the priority meeting the fourth priority condition is determined as the sixth power value, and the power difference between the sixth power value and the fifth power value is the target power difference.

In one implementation, the fifth power value is greater than the sixth power value. The fifth power value or the sixth power value corresponding to back-off on different panels are the same or different.

In some embodiments, the target power differences of different channels/signals are the same or different. The target power differences of different channels/signals are determined based on the predefinition or the network device configuration.

For example, the target power differences of different channels/signals are determined as the same based on the predefinition manner. Alternatively, the target power differences of different channels/signals are defined independently based on the predefinition manner. Alternatively, the target power differences of different channels/signals are determined based on the network device configuration.

In a power control method according to some embodiments of the present disclosure, the power back-off on the panel corresponding to channels/signals with the same priority is the same power value.

In a power control method according to some embodiments of the present disclosure, the network device can receive the capability information sent by the terminal to determine whether different PUSCH transmissions associated with different antenna panels or different TRPs have the capability to support complete or partial overlap in time domain when the terminal is based on M-DCI scheduling. Referring to Fig. 13, the method includes the following steps.

In step S1201, capability information sent by the terminal is received, where the capability information is used to indicate whether different PUSCH transmissions associated with different antenna panels or different TRPs have the capability to support complete or partial overlap in time domain when the terminal is based on M-DCI scheduling.

It should be noted that step S1201 can be implemented alone or in conjunction with any embodiment of the present disclosure, and will not be elaborated.

It should be noted, those skilled in the art can understand that the various implementations/embodiments involved in the embodiments of the present disclosure can be used in conjunction with the aforementioned embodiments or can be used independently. Whether used alone or in conjunction with the aforementioned embodiments, the implementation principle is similar. In some implementations of the present disclosure, some embodiments are described in terms of implementations used together. Those skilled in the art can understand that such examples are not limitations of the embodiments of the present disclosure.

Based on the same concept, the embodiments of the present disclosure also provide a power control apparatus.

It is understandable that the power control apparatus according to some embodiments of the present disclosure includes hardware structures and/or software modules corresponding to the execution of each function in order to realize the above functions. In combination with the units and algorithm steps of each example disclosed in the embodiments of the present disclosure, some embodiments of the present disclosure can be implemented in the form of hardware or a combination of hardware and computer software. Whether a function is executed in the form of hardware or computer software driving hardware depends on the specific application and design constraints of the technical solution. Those skilled in the art may use different manners to implement the described functions for each specific application, but such implementation should not be considered to exceed the scope of the technical solution according to the embodiments of the present disclosure.

Fig. 14 is the block diagram showing the power control apparatus according to an exemplary embodiment. Referring to Fig. 14, the apparatus includes a processing module 101.

The processing module 101 is adapted to determine the maximum transmission power of each antenna panel in multiple antenna panels used by the terminal for performing uplink simultaneous transmission via multi-panel STxMP transmission; and perform the power control on each antenna panel based on the maximum transmission power of each antenna panel.

In one implementation, the processing module 101 is adapted to determine the maximum transmission power of the terminal and/or the maximum transmission power of each antenna panel based on the configuration information.

In one implementation, the terminal performs the STxMP transmission based on single downlink control information S-DCI scheduling or multiple downlink control information M-DCI scheduling, and the maximum transmission power of the terminal configured by the configuration information is the first transmission power.

The processing module 101 is adapted to determine the maximum transmission power of each antenna panel based on the first transmission power.

In one implementation, the maximum transmission power of each antenna panel is $\frac{1}{k}$ of the first transmission power, where k represents the number of multiple antenna panels, and k is a positive integer greater than 1; or the maximum transmission power of each antenna panel is the first transmission power.

In one implementation, the terminal performs the STxMP transmission based on M-DCI scheduling, different physical downlink shared channel PUSCH transmissions associated with different antenna panels or different transmitting and receiving points TRPs are completely overlapped or partially overlapped in time domain, and the maximum transmission power of each antenna panel is $\frac{1}{k}$ of the first transmission power.

In one implementation, the terminal performs the STxMP transmission based on M-DCI scheduling, different PUSCH transmissions associated with different antenna panels or different TRPs do not support partial overlap in time domain, and the maximum transmission power of each antenna panel is the first transmission power.

In one implementation, the maximum transmission power of each antenna panel is determined as $\frac{1}{k}$ of the first transmission power, the processing module 101is adapted to perform the closed-loop power control and/or the open-loop power control on each antenna panel based on $\frac{1}{k}$ of the first transmission power.

In one implementation, the maximum transmission power of each antenna panel is determined as the first transmission power, and the processing module 101 is adapted to perform the power back-off of the first power value on each antenna panel when the sum of the transmission powers of each antenna panel is greater than the first transmission power. The first power value is determined based on the sum of the transmission powers of each antenna panel.

In one implementation, the processing module 101 is adapted to determine that the sum of the transmission powers of each antenna panel is greater than the first transmission power, and adjust the actual transmission power of each antenna panel based on the priorities of different channels/signals.

In one implementation, the maximum transmission power of the terminal configured by the configuration information is the second transmission power, the maximum transmission power of each antenna panel is the third transmission power, and the second transmission power is greater than or equal to the third transmission power.

In one implementation, the processing module 101 is adapted to determine that the maximum transmission power of each antenna panel is the third transmission power.

The processing module 101 is adapted to perform the closed-loop power control and/or the open-loop power control on each antenna panel based on the third transmission power.

In one implementation, the processing module 101 is also adapted to determine that the sum of the transmission powers of each antenna panel is greater than the second transmission power, and perform the power back-off of the second power value on each antenna panel respectively, where the second power value is determined based on the sum of the transmission powers of each antenna panel.

In one implementation, the terminal performs the STxMP transmission based on M-DCI scheduling, and the processing module 101 is also adapted to determine that PUSCH transmissions of each antenna panel or each TRP have the resource allocation of the terminal where transmission symbols are completely overlapped/partially overlapped in time domain; and perform, when the sum of transmission powers of each antenna panel is greater than the second transmission power, the power back-off of the third power value on the PUSCH transmission corresponding to each antenna panel, where the third power value is determined based on the sum of the transmission powers of each antenna panel.

In one implementation, the terminal performs the STxMP transmission based on **M-DCI** scheduling, and the processing module 101 is also adapted to determine that PUSCH transmissions of each antenna panel or each TRP have the resource allocation of the terminal where transmission symbols are completely overlapped/partially overlapped in time domain, and adjust, when the sum of transmission powers of each antenna panel is greater than the second transmission power, the actual transmission power of each antenna panel based on the priorities of different channels/signals.

In one implementation, the processing module 101 is also adapted to perform no power back-off on the actual transmission power of the antenna panel corresponding to the channel/signal with the priority meeting the first priority condition, and to perform the power back-off of the fourth power value on the antenna panel corresponding to the channel/signal with the priority meeting the second priority condition.

In one implementation, the processing module 101 is also adapted to perform the power back-off of the fifth power value on the antenna panel corresponding to the channel/signal with the priority meeting the third priority condition, and to perform the power back-off of a sixth power value on the antenna panel corresponding to the channel/signal with the priority meeting the fourth priority condition, where the power difference between the sixth power value and the fifth power value is the target power difference.

In one implementation, the target power differences of different channels/signals are the same.

Alternatively, the target power differences of different channels/signals are different, and the target power differences of different channels/signals are determined based on the predefinition or the network device configuration.

In one implementation, the processing module 101 is further adapted to perform the power back-off of the same power value on antenna panels corresponding to channels/signals with the same priority.

In one embodiment, the sending module 102 is adapted to send capability information to the network device, where the capability information is used to indicate whether different PUSCH transmissions associated with different antenna panels or different TRPs have the capability to support complete or partial overlap in time domain when the terminal is based on M-DCI scheduling.

Fig. 15 is the block diagram showing the power control apparatus according to an exemplary embodiment. Referring to Fig. 15, the apparatus includes a processing module 201.

The processing module 201 is adapted to configure, for the terminal, the maximum transmission power of the terminal and/or the maximum transmission power of each antenna panel under for performing the uplink simultaneous transmission via multi-panel STxMP transmission; and to determine the power control, performed by the terminal, of each antenna panel based on the maximum transmission power of each antenna panel.

In one implementation, it is determined that the maximum transmission power of the terminal is configured for the terminal, the maximum transmission power of the terminal is the first transmission power, and the maximum transmission power of each antenna panel is $\frac{1}{k}$ of the first transmission power, where k represents the number of the multiple antenna panels, and k is a positive integer greater than 1.

Alternatively, the maximum transmission power of each antenna panel is the first transmission power.

In one implementation, when the terminal performs the STxMP transmission based on M-DCI scheduling, and different physical downlink shared channels PUSCH transmissions associated with different antenna panels or different transmitting and receiving points TRP s are completely overlapped or partially overlapped in time domain, the maximum transmission power of each antenna panel is $\frac{1}{k}$ of the first transmission power.

In one implementation, the terminal performs the STxMP transmission based on M-DCI scheduling, different PUSCH transmissions associated with different antenna panels or different TRPs do not support partial overlap in time domain, and the maximum transmission power of each antenna panel is the first transmission power.

In one implementation, the maximum transmission power of each antenna panel is $\frac{1}{k}$ of the first transmission power, and the closed-loop power control and/or the open-loop power control of each antenna panel is determined based on $\frac{1}{k}$ of the first transmission power.

In one implementation, the maximum transmission power of each antenna panel is the first transmission power, and the processing module 201 is adapted to determine that when the sum of the transmission powers of each antenna panel of the terminal is greater than the first transmission power, the power back-off of the first power value is performed on each antenna panel, where the first power value is determined based on the sum of the transmission powers of each antenna panel.

In one implementation, the processing module 201 is adapted to determine that when the sum of the transmission powers of each antenna panel of the terminal is greater than the first transmission power, the terminal adjusts the actual transmission power of each antenna panel based on the priorities of different channels/signals.

In one implementation, the maximum transmission power of the terminal configured for the terminal is determined as the second transmission power, and the maximum transmission power of each antenna panel configured for the terminal is determined as the third transmission power. The processing module 201 is adapted to determine that the terminal performs the closed-loop power control and/or the open-loop power control on each antenna panel based on the third transmission power.

In one implementation, it is determined that the terminal performs the STxMP transmission based on S-DCI scheduling, and the processing module 201 is adapted to determine that when the sum of the transmission powers of the terminal at each antenna panel is greater than the second transmission power, the terminal performs the power back-off of the second power value on each antenna panel, where the second power value is determined based on the sum of the transmission powers of each antenna panel.

In one implementation, it is determined that the terminal performs the STxMP transmission based on M-DCI scheduling, and the processing module 201 is adapted to determine that PUSCH transmissions of each antenna panel or each TRP have the resource allocation of the terminal where transmission symbols are completely overlapped/partially overlapped in time domain, and determine that, when the sum of the transmission powers of each antenna panel is greater than the second transmission power, the terminal performs the power back-off of the third power value on the PUSCH transmission corresponding to each antenna panel, where the third power value is determined based on the sum of the transmission powers of each antenna panel.

In one implementation, it is determined that the terminal performs the STxMP transmission based on M-DCI scheduling, and the processing module 201 is adapted to determine that PUSCH transmissions of each antenna panel or each TRP have a resource allocation of the terminal where transmission symbols are completely overlapped/partially overlapped in time domain, and determine that, when the sum of the transmission powers of each antenna panel is greater than the second transmission power, the terminal adjusts the actual transmission power of each antenna panel based on the priorities of different channels/signals.

In one implementation, the processing module 201 is adapted to determine that the terminal does not perform the power back-off on the actual transmission power of the antenna panel corresponding to the channel/signal with the priority meeting the first priority condition, and determine that the terminal performs the power back-off of the fourth power value on the antenna panel corresponding to the channel/signal with the priority meeting the second priority condition.

In one implementation, the processing module 201 is adapted to determine that the terminal performs the power back-off of the fifth power value on the antenna panel corresponding to the channel/signal with the priority meeting the third priority condition, and determine that the terminal performs the power back-off of the sixth power value on the antenna panel corresponding to the channel/signal with the priority meeting the fourth priority condition, where the power difference between the sixth power value and the fifth power value is the target power difference.

In one implementation, the target power differences of different channels/signals are the same.

Alternatively, the target power differences of different channels/signals are different, and the target power differences of different channels/signals are determined based on the predefinition or the network device configuration.

In one implementation, the processing module 201 is adapted to determine that the terminal performs the power back-off of the same power value on antenna panels corresponding to channels/signals with the same priority.

In one implementation, the receiving module 202 is adapted to receive capability information sent by the terminal, where the capability information is used to indicate whether different PUSCH transmissions associated with different antenna panels or different TRPs have the capability to support complete or partial overlap in time domain when the terminal is based on M-DCI scheduling.

Regarding the apparatus in the above embodiments, the specific manner of each module for performing operations has been described in detail in the embodiments of the method, and will not be elaborated here.

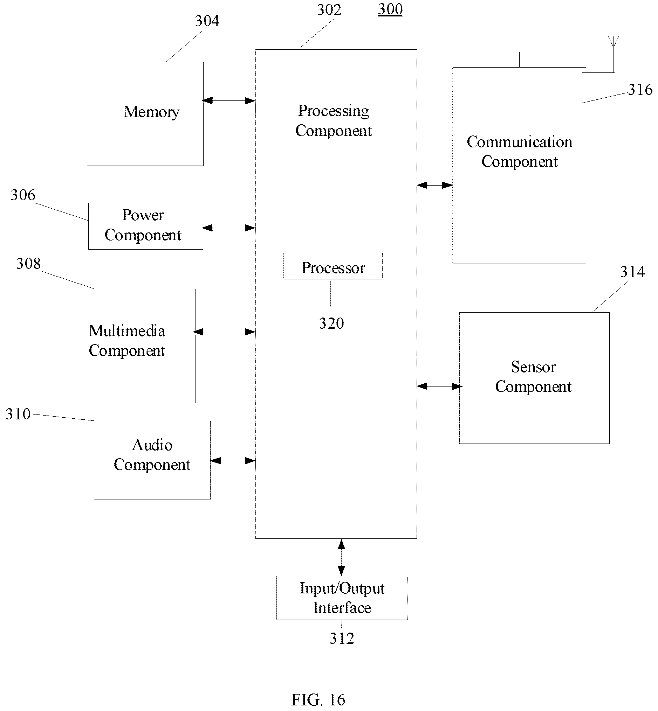

Fig. 16 is the block diagram showing the power control apparatus according to an exemplary embodiment. For example, the apparatus 300 may be a mobile phone, a computer, a digital broadcast terminal, a messaging device, a game console, a tablet device, a medical device, a fitness device, a personal digital assistant, and the like.

Referring to Fig. 16, the apparatus 300 may include one or more of the following components: a processing component 302, a memory 304, a power component 306, a multimedia component 308, an audio component 310, an input/output (I/O) interface 312, a sensor component 314, and a communication component 316.

The processing component 302 generally controls the overall operation of the apparatus 300, such as operations associated with display, phone calls, data communications, camera operations, and recording operations. The processing component 302 may include one or more processors 320 to execute instructions to perform all or part of the steps of the above-mentioned method. In addition, the processing component 302 may include one or more modules to facilitate the interaction between the processing component 302 and other components. For example, the processing component 302 may include a multimedia module to facilitate the interaction between the multimedia component 308 and the processing component 302.

The memory 304 is configured to store various types of data to support operations on the apparatus 300. Examples of such data include instructions for any application or method operating on the apparatus 300, contact data, phone book data, messages, pictures, videos, and the like. The memory 304 can be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 306 provides power to the various components of the apparatus 300. The power component 306 may include a power management system, one or more power supplies, and other components associated with generating, managing, and distributing power for the apparatus 300.

The multimedia component 308 includes a screen that provides an output interface between the apparatus 300 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 308 includes a front camera and/or a rear camera. When the apparatus 300 is in an operating mode, such as a shooting mode or a video mode, the front camera and/or the rear camera may receive external multimedia data. Each front camera and rear camera may be a fixed optical lens system or have a focal length and optical zoom capability.

The audio component 310 is configured to output and/or input audio signals. For example, the audio component 310 includes a microphone (MIC), and when the apparatus 300 is in an operating mode, such as a call mode, a recording mode, and a speech recognition mode, the microphone is configured to receive an external audio signal. The received audio signal can be further stored in the memory 304 or sent via the communication component 316. In some embodiments, the audio component 310 also includes a speaker for outputting audio signals.

I/O interface 312 provides an interface between processing component 302 and peripheral interface modules, such as keyboards, click wheels, buttons, and the like. These buttons may include but are not limited to, a home button, a volume button, a start button, and a lock button.

The sensor assembly 314 includes one or more sensors for providing various aspects of the status assessment of the apparatus 300. For example, the sensor assembly 314 can detect the turn-on/-off state of the apparatus 300, the relative positioning of components, such as the display and keypad of the apparatus 300 The sensor assembly 314 can also detect the position change of the apparatus 300 or a component of the apparatus 300, the presence or absence of user contact with the apparatus 300, the orientation or acceleration/deceleration of the apparatus 300, and the temperature change of the apparatus 300. The sensor assembly 314 may include a proximity sensor configured to detect the presence of nearby objects without any physical contact. The sensor assembly 314 can also include an optical sensor, such as a CMOS or CCD image sensor, for use in imaging applications. In some embodiments, the sensor assembly 314 can also include an acceleration sensor, a gyroscope sensor, a magnetic sensor, a pressure sensor, or a temperature sensor.

The communication component 316 is configured to facilitate wired or wireless communication between the apparatus 300 and other devices. The apparatus 300 can access a wireless network based on a communication standard, such as WiFi, 2G or 3G, or a combination thereof. In an exemplary embodiment, the communication component 316 receives a broadcast signal or broadcast-related information from an external broadcast management system via a broadcast channel. In an exemplary embodiment, the communication component 316 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the apparatus 300 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above method.

In an exemplary embodiment, a non-transitory computer-readable storage medium including instructions is also provided, such as the memory 304 including instructions, where the instructions may be executed by the processor 320 of the apparatus 300 to implement the above method. For example, the non-transitory computer-readable storage medium can be a ROM, a random access memory (RAM), a CD-ROM, a magnetic tape, a floppy disk, an optical data storage device, and the like.

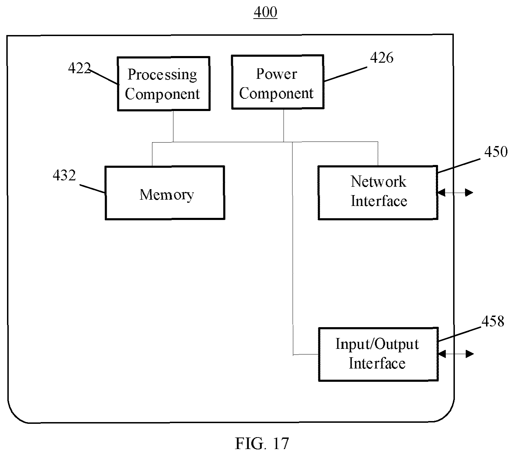

Fig. 17 is the block diagram showing the power control apparatus according to an exemplary embodiment. For example, the apparatus 400 may be provided as the network device. Referring to Fig. 17, the apparatus 400 includes a processing component 422, which further includes one or more processors, and a memory resource represented by a memory 432 for storing instructions executable by the processing component 422, such as an application program. The application program stored in the memory 432 may include one or more modules, each corresponding to a set of instructions. In addition, the processing component 422 is configured to execute instructions, so as to implement the above method.

The apparatus 400 may also include a power supply component 426 configured to perform power management of the apparatus 400, a wired or wireless network interface 450 configured to connect the apparatus 400 to a network, and an input/output (I/O) interface 458. The apparatus 400 may operate based on an operating system stored in the memory 432, such as Windows Server™, Mac OS X™, Unix™, Linux™, FreeBSD™, or the like.

In an exemplary embodiment, a non-transitory computer-readable storage medium including instructions is also provided, such as a memory 432 including instructions, which may be executed by the processing component 422 of the apparatus 400 to implement the above method. For example, the non-transitory computer-readable storage medium can be a ROM, a random access memory (RAM), a CD-ROM, a magnetic tape, a floppy disk, an optical data storage device, and the like.

It is further understood that in the present disclosure, " multiple/plurality" refers to two or more than two, and other quantifiers are similar. "And/or" describes the association relationship of associated objects, indicating that three relationships may exist. For example, A and/or B can represent: A exists alone, both A and B exist, and B exists alone. The character "/" generally indicates that the associated objects before and after are in an "or" relationship. The singular forms "a", "the" and "said" are also intended to include the plural forms, unless the context clearly indicates otherwise.

It is further understood that the meanings of the words "in response to" and "if" involved in the present disclosure depend on the context and the actual usage scenario. For example, the word "in response to" used herein can be interpreted as "at..." or "when..." or "if".

It is further understood that the terms "first", "second", and the like are used to describe various information, but such information should not be limited to these terms. These terms are only used to distinguish the same type of information from each other, and do not indicate a specific order or degree of importance. In fact, the expressions "first", "second", and the like can be used interchangeably. For example, without departing from the scope of the present disclosure, the first information can also be referred to as the second information, and similarly, the second information can also be referred to as the first information.

It is further understood that, although the operations are described in a specific order in the drawings in the embodiments of the present disclosure, it should not be understood as requiring the operations to be performed in the specific order shown or in a serial order, or requiring the execution of all the operations shown to obtain the desired results. In certain environments, multitasking and parallel processing may be advantageous.

Those skilled in the art will readily appreciate other embodiments of the present disclosure after considering the specification and practicing the invention disclosed herein. This application is intended to cover any modifications, uses or adaptations of the present disclosure, which follow the general principles of the present disclosure and include common knowledge or customary technical means in the art that are not disclosed in the present disclosure.

It should be understood that the present disclosure is not limited to the precise structures that have been described above and shown in the drawings, and that various modifications and changes may be made without departing from the scope thereof. The scope of the present disclosure is limited only by the scope of the appended claims.

## Claims

1. A method for power control, wherein the method is performed by a terminal and comprises:

   determining a maximum transmission power of each antenna panel in multiple antenna panels used by the terminal for performing uplink simultaneous transmission via multi-panel STxMP transmission; and
   performing a power control on each antenna panel based on the maximum transmission power of each antenna panel.

2. The method according to claim 1, further comprising:
   determining a maximum transmission power of the terminal and/or the maximum transmission power of each antenna panel based on configuration information.

3. The method according to claim 2, wherein the terminal performs the STxMP transmission based on single downlink control information S-DCI scheduling or multiple downlink control information M-DCI scheduling, the maximum transmission power of the terminal configured by the configuration information is a first transmission power, and the maximum transmission power of each antenna panel is determined based on the first transmission power.

4. The method according to claim 3, wherein the maximum transmission power of each

   antenna panel is $\dfrac{1}{k}$ of the first transmission power, where k represents a number of the multiple antenna panels, and k is a positive integer greater than 1; or
   the maximum transmission power of each antenna panel is the first transmission power.

5. The method according to claim 4, wherein the terminal performs the STxMP transmission based on M-DCI scheduling, different physical uplink shared channel PUSCH transmissions associated with different antenna panels or different transmission and reception points TRPs are completely or partially overlapped in time domain, and the maximum transmission power of each antenna panel is $\dfrac{1}{k}$ of the first transmission power.

6. The method according to claim 4, wherein the terminal performs the STxMP transmission based on M-DCI scheduling, different PUSCH transmissions associated with different antenna panels or different TRPs do not support partial overlap in time domain, and the maximum transmission power of each antenna panel is the first transmission power.

7. The method according to claim 4 or 5, wherein the maximum transmission power of each antenna panel is determined as $\dfrac{1}{k}$ of the first transmission power, and performing the power control on each antenna panel based on the maximum transmission power of each antenna panel comprises:

    performing a closed-loop power control and/or an open-loop power control on each antenna panel based on $\dfrac{1}{k}$ of the first transmission power.

8. The method according to claim 4 or 6, wherein the maximum transmission power of each antenna panel is determined as the first transmission power, and performing the power control on each antenna panel based on the maximum transmission power of each antenna panel comprises:
    performing a power back-off of a first power value on each antenna panel when a sum of transmission powers of each antenna panel is greater than the first transmission power, wherein the first power value is determined based on the sum of transmission powers of each antenna panel.

9. The method according to claim 6, wherein performing the power control on each antenna panel based on the maximum transmission power of each antenna panel comprises:
    determining that the sum of transmission powers of each antenna panel is greater than the first transmission power, and adjusting an actual transmission power of each antenna panel based on priorities of different channels/signals.

10. The method according to claim 2, wherein the maximum transmission power of the terminal configured by the configuration information is a second transmission power, the maximum transmission power of each antenna panel is a third transmission power, and the second transmission power is greater than or equal to the third transmission power.

11. The method according to claim 10, wherein the maximum transmission power of each antenna panel is the third transmission power; and
    performing the power control on each antenna panel based on the maximum transmission power of each antenna panel comprises:
    performing a closed-loop power control and/or an open-loop power control on each antenna panel respectively based on the third transmission power.

12. The method according to claim 11, wherein the terminal performs the STxMP transmission based on S-DCI scheduling, and the method further comprises:
    determining that a sum of transmission powers of each antenna panel is greater than the second transmission power, and performing a power back-off of a second power value on each antenna panel respectively, wherein the second power value is determined based on the sum of transmission powers of each antenna panel.

13. The method according to claim 11, wherein the terminal performs the STxMP transmission based on M-DCI scheduling, and the method further comprises:
    determining that PUSCH transmissions of each antenna panel or each TRP have a resource allocation where transmission symbols are completely overlapped/partially overlapped in time domain, when a sum of transmission powers of each antenna panel is greater than the second transmission power, performing a power back-off of a third power value on PUSCH transmissions corresponding to each antenna panel respectively, wherein the third power value is determined based on a sum of transmission powers of each antenna panel.

14. The method according to claim 11, wherein the terminal performs the STxMP transmission based on M-DCI scheduling, and the method further comprises:
determining that PUSCH transmissions of each antenna panel or each TRP have a resource allocation where transmission symbols are completely overlapped/partially overlapped in time domain, when a sum of transmission powers of each antenna panel is greater than the second transmission power, adjusting an actual transmission power of each antenna panel based on priorities of different channels/signals.

15. The method according to claim 9 or 14, wherein adjusting the actual transmission power of each antenna panel based on the priorities of different channels/signals comprises:
not performing a power back-off on an actual transmission power of an antenna panel corresponding to a channel/signal with a priority meeting a first priority condition, and performing a power back-off of a fourth power value on the antenna panel corresponding to a channel/signal with a priority meeting a second priority condition respectively.

16. The method according to claim 9 or 14, wherein performing the power control on each antenna panel based on the priorities of different channels/signals comprises:
performing a power back-off of a fifth power value on an antenna panel corresponding to a channel/signal with a priority meeting a third priority condition, and performing a power back-off of a sixth power value on the antenna panel corresponding to a channel/signal with a priority meeting a fourth priority condition respectively, wherein a power difference between the sixth power value and the fifth power value is a target power difference.

17. The method according to claim 16, wherein target power differences of different channels/signals are same; or target power differences of different channels/signals are different, and the target power differences of different channels/signals are determined based on a predefinition or a network device configuration.

18. The method according to claim 9 or 14, wherein performing the power control on each antenna panel based on the priorities of different channels/signals comprises:
performing a power back-off of a same power value on antenna panels corresponding to channels/signals with a same priority.

19. The method according to any one of claims 5 to 18, further comprising:
sending capability information to a network device, wherein the capability information is used to indicate whether different PUSCH transmissions associated with different antenna panels or different TRPs have a capability to support complete or partial overlap in time domain when the terminal is based on M-DCI scheduling.

20. A method for power control, wherein the method is performed by a network device and comprises:

configuring, for the terminal, a maximum transmission power of a terminal and/or a maximum transmission power of each antenna panel for performing uplink simultaneous transmission via multi-panel STxMP transmission; and determining a power control, performed by the terminal, of each antenna panel based on the maximum transmission power of each antenna panel.

21. The method according to claim 20, wherein it is determined that the terminal is configured with the maximum transmission power of the terminal, the maximum transmission power of the terminal is a first transmission power, and the maximum transmission power of each antenna panel is $\dfrac{1}{k}$ of the first transmission power, where k represents a number of the multiple antenna panels and k is a positive integer greater than 1; or the maximum transmission power of each antenna panel is the first transmission power.

22. The method according to claim 21, wherein the terminal performs the STxMP transmission based on M-DCI scheduling, and when different physical uplink shared channel PUSCH transmissions associated with different antenna panels or different transmission and reception points TRPs are completely or partially overlapped in time domain, the maximum transmission power of each antenna panel is $\dfrac{1}{k}$ of the first transmission power.

23. The method according to claim 22, wherein the terminal performs the STxMP transmission based on M-DCI scheduling, the different PUSCH transmissions associated with different antenna panels or different TRPs do not support partial overlap in time domain, and the maximum transmission power of each antenna panel is the first transmission power.

24. The method according to claim 22 or 23, wherein the maximum transmission power of each antenna panel is $\frac{1}{k}$ of the first transmission power, and a closed-loop power control and/or an open-loop power control of each antenna panel is/are determined based on $\frac{1}{k}$ of the first transmission power.

25. The method according to claim 21 or 23, wherein the maximum transmission power of each antenna panel is the first transmission power, and determining the power control, performed by the terminal, of each antenna panel based on the maximum transmission power of each antenna panel comprises:
determining that, when a sum of transmission powers of each antenna panel is greater than the first transmission power, the terminal performs a power back-off of a first power value on each antenna panel, wherein the first power value is determined based on the sum of transmission powers of each antenna panel.

26. The method according to claim 23, wherein determining the power control, performed by the terminal, of each antenna panel based on the maximum transmission power of each antenna panel comprises:
determining that, when the sum of transmission powers of each antenna panel is greater than the first transmission power, the terminal adjusts an actual transmission power of each antenna panel based on priorities of different channels/signals.

27. The method according to claim 20, wherein the maximum transmission power of the terminal configured for the terminal is determined as a second transmission power, the maximum transmission power of each antenna panel configured for the terminal is determined as a third transmission power, and determining the power control, performed by the terminal, of each antenna panel based on the maximum transmission power of each antenna panel comprises:
determining that the terminal performs a closed-loop power control and/or an open-loop power control on each antenna panel based on the third transmission power.

28. The method according to claim 27, wherein it is determined that the terminal performs the STxMP transmission based on S-DCI scheduling, and the method further comprises:
determining that, when a sum of transmission powers of each antenna panel is greater than the second transmission power, the terminal performs a power back-off of a second power value on each antenna panel, wherein the second power value is determined based on the sum of transmission powers of each antenna panel.

29. The method according to claim 27, wherein it is determined that the terminal performs the STxMP transmission based on M-DCI scheduling, and the method further comprises:
determining that PUSCH transmissions of each antenna panel or each TRP have a resource allocation of the terminal where transmission symbols are completely overlapped/partially overlapped in time domain, and determining that, when a sum of transmission powers of each antenna panel is greater than the second transmission power, the terminal performs a power back-off of a third power value on PUSCH transmissions corresponding to each antenna panel, wherein the third power value is determined based on a sum of transmission powers of each antenna panel.

30. The method according to claim 27, wherein it is determined that the terminal performs the STxMP transmission based on M-DCI scheduling, and the method further comprises:
determining that PUSCH transmissions of each antenna panel or each TRP have a resource allocation of the terminal where transmission symbols are completely overlapped/partially overlapped in time domain, and determining that, when a sum of transmission powers of each antenna panel is greater than the second transmission power, the terminal adjusts an actual transmission power of each antenna panel based on priorities of different channels/signals.

31. The method according to claim 26 or 30, wherein determining that the terminal adjusts the actual transmission power of each antenna panel based on the priorities of different channels/signals comprises:
determining that the terminal does not perform a power back-off on an actual transmission power of an antenna panel corresponding to a channel/signal with a priority meeting a first priority condition, and determining that the terminal performs a power back-off of a fourth power value on the antenna panel corresponding to a channel/signal with a priority meeting a second priority condition.

32. The method according to claim 26 or 30, wherein determining that the terminal adjusts the actual transmission power of each antenna panel based on the priorities of different channels/signals comprises:
determining that the terminal performs a power back-off of a fifth power value on an antenna panel corresponding to a channel/signal with a priority meeting a third priority condition, and determining that the terminal performs a power back-off of a sixth power value on the antenna panel corresponding to a channel/signal with a priority meeting a fourth priority condition, wherein a power difference between the sixth power value and the fifth power value is a target power difference.

33. The method according to claim 32, wherein the target power differences of different channels/signals are same; or the target power differences of different channels/signals are different, and the target power differences of different channels/signals are determined based on a predefinition or a network device configuration.

34. The method according to claim 26 or 30, wherein determining that the terminal adjusts the actual transmission power of each antenna panel based on the priorities of different channels/signals comprises:
determining that the terminal performs a power back-off of a same power value on antenna panels corresponding to channels/signals with a same priority.

35. The method according to any one of claims 22 to 34, further comprising:
receiving capability information sent by the terminal, wherein the capability information is used to indicate whether different PUSCH transmissions associated with different antenna panels or different TRPs have a capability to support complete or partial overlap in time domain when the terminal is based on M-DCI scheduling.

36. A power control apparatus, wherein the apparatus comprises:

a determination module adapted to determine a maximum transmission power of each antenna panel in multiple antenna panels used by the terminal for performing uplink simultaneous transmission via multi-panel STxMP transmission; and
a control module adapted to perform a power control on each antenna panel based on the maximum transmission power of each antenna panel.

37. A power control apparatus, wherein the apparatus comprises:
a processing module adapted to configure, for a terminal, a maximum transmission power of the terminal and/or a maximum transmission power of each antenna panel for performing uplink simultaneous transmission via multi-panel STxMP transmission; and determine a power control, performed by the terminal, of each antenna panel based on the maximum transmission power of each antenna panel.

38. A communication apparatus, wherein the apparatus comprises:

a processor; and
a memory configured to store processor-executable instructions;
wherein the processor is configured to perform the method according to any one of claims 1 to 19 or any one of claims 20 to 35.

39. A storage medium, wherein the storage medium stores instructions, when the instructions in the storage medium are executed by a processor of a terminal, the terminal is enabled to perform the method according to any one of claims 1 to 19; or when the instructions in the storage medium are executed by the processor of a network device, the network device is enabled to perform the method according to any one of claims 20 to 35.

40. A communication system, comprising a terminal and a network device, wherein: the terminal is configured to perform the method according to any one of claims 1 to 19; and the network device is configured to perform the method according to any one of claims 20 to 35.

**EP 4 668 900 A1**

FIG. 1

S11

Determine the maximum transmission power of each panel in multiple panels used by the terminal for performing STxMP transmission

S12

Perform the power control on each panel based on the maximum transmission power of each panel

FIG. 2

S21

Determine the maximum transmission power of the terminal and/or the maximum transmission power of each panel based on the configuration information

FIG. 3

determine the maximum transmission power of each panel is $\frac{1}{k}$ of the first transmission power

S31

perform the closed-loop power control and the open-loop power control on each antenna panel based on $\frac{1}{k}$ of the first transmission power

S32

FIG. 4

Determine the maximum transmission power of each panel is the first transmission power

S41

When the sum of the transmission powers of each panel is greater than the first transmission power, perform the power back-off of the first power value on each panel respectively

S42

FIG. 5

Determine the maximum transmission power of each panel is the first transmission power

S51

Determine that the sum of the transmission powers of each panel is greater than the first transmission power, and adjust the actual transmission power of each panel based on the priorities of different channels/signals

S52

FIG. 6

S61

Determine the maximum transmission power of each panel is the third transmission power

S62

Perform the closed-loop power control and the open-loop power control on each panel based on the third transmission power

FIG. 7

S71

Determine that the terminal performs the STxMP transmission based on S-DCI scheduling

S72

Determine that the sum of the transmission powers of each panel is greater than the second transmission power, and perform the power back-off of the second power value on each panel

FIG. 8

Determine that the terminal performs the STxMP transmission based on M-DCI scheduling

S81

Determine that PUSCH transmissions of each panel or each TRP have the resource allocation where transmission symbols are completely overlapped/ partially overlapped in time domain, when the sum of transmission powers of each antenna panel is greater than the second transmission power, perform the power back-off of the third power value on the PUSCH transmission corresponding to each panel

S82

FIG. 9

Determine that the terminal performs the STxMP transmission based on M-DCI scheduling

S91

Determine that PUSCH transmissions of each panel or each TRP have the resource allocation where transmission symbols are completely overlapped/ partially overlapped in time domain, when the sum of transmission powers of each antenna panel is greater than the second transmission power, adjust the actual transmission power of each antenna panel based on the priorities of different channels/signals

S92

FIG. 10

Send capability information to the network device, where the capability information is used to indicate whether different PUSCH transmissions associated with different antenna panels or different TRPs have the capability to support complete or partial overlap in time domain when the terminal is based on M-DCI scheduling

S1001

FIG. 11

S1101

The network device configures, for the terminal, the maximum transmission power of the terminal and/or the maximum transmission power of each antenna panel in the STxMP transmission

S1102

The network device determines the power control, performed by the terminal, of each antenna panel based on the maximum transmission power of each antenna panel

FIG. 12

S1201

Receive capability information sent by the terminal, where the capability information is used to indicate whether different PUSCH transmissions associated with different antenna panels or different TRPs have the capability to support complete or partial overlap in time domain when the terminal is based on M-DCI scheduling

FIG. 13

Processing Module 101

Sending Module 102

FIG. 14

Processing Module 201

Receiving Module 202

FIG. 15

FIG. 16

400

| | |
|---|---|
| 422 Processing Component | Power Component 426 |

432 Memory

Network Interface 450

Input/Output Interface 458

FIG. 17

## INTERNATIONAL SEARCH REPORT

| International application No. |
|---|
| **PCT/CN2023/076970** |

### A. CLASSIFICATION OF SUBJECT MATTER

H04W 52/14(2009.01)i

According to International Patent Classification (IPC) or to both national classification and IPC

### B. FIELDS SEARCHED

Minimum documentation searched (classification system followed by classification symbols)

IPC: H04W,H04L,H04B

Documentation searched other than minimum documentation to the extent that such documents are included in the fields searched

Electronic data base consulted during the international search (name of data base and, where practicable, search terms used)

3GPP, CNTXT, DWPI, ENTXT: 发射, 发送, 功率, 控制, 调整, 面板, 时域, 重叠, 最大, simultaneous, STxMP, overlap+, maximum transmission power, power limitation, multi-panel, per-panel, M-DCI, mDCI, S-DCI, power control

### C. DOCUMENTS CONSIDERED TO BE RELEVANT

| Category* | Citation of document, with indication, where appropriate, of the relevant passages | Relevant to claim No. |
|---|---|---|
| X | WO 2019134100 A1 (GUANGDONG OPPO MOBILE COMMUNICATIONS CO., LTD.) 11 July 2019 (2019-07-11)<br>description, page 5 line 17-page 9 line 7 | 1-7, 20-24, 36-40 |
| Y | WO 2019134100 A1 (GUANGDONG OPPO MOBILE COMMUNICATIONS CO., LTD.) 11 July 2019 (2019-07-11)<br>description, page 5 line 17-page 9 line 7 | 8-19, 25-35 |
| Y | WO 2022213272 A1 (APPLE INC.) 13 October 2022 (2022-10-13)<br>description, paragraphs [0099]-[00157] | 8-19, 25-35 |
| X | CN 115606300 A (BEIJING XIAOMI MOBILE SOFTWARE CO., LTD.) 13 January 2023 (2023-01-13)<br>description, paragraphs [0003] and [0072]-[0084] | 1-2, 20, 36-40 |
| A | CN 111955033 A (LENOVO (SINGAPORE) PTE. LTD.) 17 November 2020 (2020-11-17)<br>entire document | 1-40 |
| A | WO 2021212451 A1 (QUALCOMM INC.) 28 October 2021 (2021-10-28)<br>entire document | 1-40 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 August 2023** | **28 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/076970** |

**C. DOCUMENTS CONSIDERED TO BE RELEVANT**

| Category* | Citation of document, with indication, where appropriate, of the relevant passages | Relevant to claim No. |
| --- | --- | --- |
| A | US 2022174609 A1 (LG ELECTRONICS INC.) 02 June 2022 (2022-06-02) entire document | 1-40 |
| A | VIVO. "Views on unified TCI framework extension for multi-TRP" *3GPP TSG RAN WG1 #109-e, R1-2203541*, 29 April 2022 (2022-04-29), entire document | 1-40 |

Form PCT/ISA/210 (second sheet) (July 2022)

## INTERNATIONAL SEARCH REPORT
### Information on patent family members

International application No.

**PCT/CN2023/076970**

| Patent document cited in search report | | | Publication date (day/month/year) | Patent family member(s) | | | Publication date (day/month/year) |
|---|---|---|---|---|---|---|---|
| WO | 2019134100 | A1 | 11 July 2019 | KR | 20200106518 | A | 14 September 2020 |
| | | | | AU | 2018400270 | A1 | 20 August 2020 |
| | | | | EP | 3731448 | A1 | 28 October 2020 |
| | | | | JP | 2021514563 | A | 10 June 2021 |
| | | | | US | 2020336990 | A1 | 22 October 2020 |
| | | | | CN | 111602361 | A | 28 August 2020 |
| | | | | IN | 202027032953 | A | 02 October 2020 |
| WO | 2022213272 | A1 | 13 October 2022 | None | | | |
| CN | 115606300 | A | 13 January 2023 | None | | | |
| CN | 111955033 | A | 17 November 2020 | US | 2021410079 | A1 | 30 December 2021 |
| | | | | EP | 3777359 | A1 | 17 February 2021 |
| | | | | US | 2019313348 | A1 | 10 October 2019 |
| | | | | US | 2023058165 | A1 | 23 February 2023 |
| | | | | US | 2019313343 | A1 | 10 October 2019 |
| | | | | US | 2021211986 | A1 | 08 July 2021 |
| | | | | EP | 3777363 | A2 | 17 February 2021 |
| | | | | US | 2020367174 | A1 | 19 November 2020 |
| | | | | WO | 2019193419 | A2 | 10 October 2019 |
| | | | | WO | 2019193420 | A1 | 10 October 2019 |
| | | | | CN | 111955034 | A | 17 November 2020 |
| WO | 2021212451 | A1 | 28 October 2021 | US | 2023122357 | A1 | 20 April 2023 |
| | | | | EP | 4140203 | A1 | 01 March 2023 |
| | | | | CN | 115413423 | A | 29 November 2022 |
| | | | | IN | 202227047935 | A | 04 November 2022 |
| US | 2022174609 | A1 | 02 June 2022 | WO | 2020197292 | A1 | 01 October 2020 |

Form PCT/ISA/210 (patent family annex) (July 2022)